# EUROPEAN PATENT APPLICATION

(11) **EP 2 559 472 A1**
(43) Date of publication of application: **20.02.2013**
(21) Application number: 11006647.9
(22) Date of filing: 15.08.2011
(51) Int. Cl.: B01D 53/14

(54) **Integrated carbon dioxide capture for cement plants**

(71) Applicant: Alstom Technology Ltd., 5400 Baden (CH)
(72) Inventor: Stallmann, Olaf, 55270 Essenheim (DE)
(74) Representative: Simonsson, Erik

(57) **Abstract**

The present invention relates to a cement manufacturing plant characterized in that the plant comprises a system for capturing carbon dioxide (CO₂) from an exhaust gas stream generated in the kiln 110 of the cement manufacturing plant by using regenerative calcium cycle (RCC) into the cement manufacturing process. Also, the invention relates to a method of capturing carbon dioxide CO₂ from a carbon dioxide CO₂ rich exhaust gas stream generated in a cement kiln, wherein the method comprises recirculation of the carbon dioxide CO₂ rich exhaust gas stream to a unit for carbonization.

## Description

### Field of the Invention

The present invention relates cement manufacturing plant wherein a system for capturing of carbon dioxide (CO₂) in a carbon dioxide (CO₂) rich exhaust gas stream has been integrated. The invention relates also to a method for capturing carbon dioxide.

### Background of the Invention

In the cement manufacturing process carbon dioxide CO₂ is released Into the atmosphere directly when the calcium carbonate is heated, producing lime and carbon dioxide. This is the process taking place in the kiln and the calciner, thus the heart in the cement production. Carbon dioxide CO₂ is also, indirectly, emitted through the use of energy if its production involves the emission of CO₂.

The cement industry is the second largest CO₂ emitting industry behind power generation. The cement industry produces about 5% of global man-made CO₂ emissions, of which 60% is from the chemical process, and 40% from burning fuel. The amount of CO₂ emitted by the cement industry is nearly 900 kg of CO₂ for every 1000 kg of cement produced.

Use of the Carbone Capture and Storage (CCS) is becoming or more interest as the production of the carbon dioxide cannot be avoided when producing the cement, as it is involved in the chemical process as well as generated in the energy consumption. The carbon dioxide is generated during the calcination, thus during the extraction of lime from the limestone.

The calcination is an endothermic process and it is required that energy is supplied to the reaction taking place in the calciner. The calciner is operating at temperature of 900 °C. In the conventional cement plants this energy is generated and supplied from the kiln exhaust gas. Also a firing system dedicated to supply energy to the calciner may be required to generate the required energy.

There is a need for processes that improve and optimize the utilization of energy in such systems. The reduction or removal of the carbon dioxide is most often a process of heat generation. Therefore there is a demand to find a process where the generation of heat is limited.

### Summary of the Invention

The present invention relates to a cement manufacturing plant wherein the carbon dioxide CO₂ is captured to an almost pure CO₂ stream by including a closed loop of exhaust gas from the cement kiln together with a unit for carbonation.

In the unit for carbonation, hereafter denoted the 'carbonator', the lime (CaO) reacts with carbon dioxide CO₂ for form limestone (CaCO₃), thus a carbonation reaction.

During the calcination process included in the process for manufacturing cement, and taking place in the unit for calcinations, hereafter denoted the 'calciner', the limestone CaCO₃ is converted, or decomposed, to lime and carbon dioxide CO₂ when treated with heat.

The CO₂ capture process according to the above described scheme, using lime to capture CO₂ from flue gases and routing the limestone to the calciner for CO₂ release, is called the regenerative calcium cycle (RCC).

An object of the present invention is to provide an Integrated system for capturing CO₂ in a cement manufacturing plant.

An object of the present invention is to improve the utilization of energy generated in a cement manufacturing plant.

According to an aspect illustrated herein, there is provided a cement manufacturing plant wherein the plant comprises a system for capturing carbon dioxide (CO₂) from an exhaust gas stream generated in the cement kiln of the cement manufacturing plant and incorporating the regenerative calcium cycle (RCC) into the cement manufacturing process.

An embodiment of the invention is a cement manufacturing plant wherein the system comprises a carbonator for capturing the carbon dioxide CO₂ present in the exhaust gas present in the plant.

Another embodiment of the invention is the cement manufacturing plant wherein the system comprising means for recirculation of the exhaust gas from the kiln to the carbonator downstream the kiln.

Another embodiment of the invention is the cement manufacturing plant wherein the carbonator is operating at temperature in the range between 550 and 750 °C, preferably at 650 °C.

Another embodiment of the invention is the cement manufacturing plant wherein the solids comprising calcium carbonate from the carbonator; is transferred to the unit for treatment of the cement raw material; and the separated solids comprising calcium carbonate CaCO₃ are transferred to the calciner.

Another embodiment of the invention is the cement manufacturing plant wherein the solids comprising calcium oxide, CaO, from the calciner is partly transferred to the carbonator.

The system may comprise one or more solid/solid heat exchangers wherein the calcium carbonate CaCO₃ from the carbonator is pre-heated to a temperature of, for example, 750 °C by a counter-current flow of the calcium oxide rich stream fed from the calciner.

Another embodiment of the invention is the cement manufacturing plant wherein the calciner is supplied with energy by recycling of carbon dioxide CO₂ rich exhacust gas stream being heated by heat exchange with the hot exhaust gas stream generated in the cement kiln.

This overall arrangement separates the exhaust gas stream generated in the cement kiln, and the optional firing systems, from the calciner. The arrangement generates a gas stream downstream the unit for treatment of the cement raw material being almost pure carbon dioxide CO₂ gas. Further, advantageously, no arrangement for separation of air, for example an air separation unit (ASU), is needed in the system of the invention.

Another embodiment of the invention is the cement manufacturing plant wherein the exhaust gas generated in the cement kiln is subject for preheating air In a heat exchanger.

Another embodiment of the invention is the cement manufacturing plant wherein the exhaust gas generated in the cement kiln is to be used for generating steam in a steam generator.

Another embodiment of the invention is the cement manufacturing plant wherein said system comprises means for dust removal.

Exhaust gas directly from the kiln outlet may be at high temperature, typically in the range of 800-1200 °C. The exhaust gas after use in pre-heating of the cement raw materials and after being subjected to dust removal may typically be at a temperature in the range of 100-300 °C.

Another embodiment of the invention is the cement manufacturing plant wherein said system comprises means for adjusting pressure of the exhaust gas generated in the kiln.

According to other aspects illustrated herein, there is provided a method for capturing carbon dioxide wherein the method of capturing carbon dioxide CO₂ from a carbon dioxide CO₂ rich exhaust gas stream generated in a cement kiln, the method comprising recirculation of the carbon dioxide CO₂ rich exhaust gas stream to a unit for carbonation, the carbonator. The carbon dioxide CO₂ is absorbed by the lime, more specifically; it participates in the reaction with lime, CaO, to form limestone, CaCO3.

Another embodiment of the invention is the method for capturing carbon dioxide CO₂ from a carbon dioxide CO₂ rich exhaust gas stream generated in a cement kiln, wherein the carbonization is taking place at temperature in the range between 550 and 750 °C, preferably at 650 °C.

Another embodiment of the invention is the method for capturing CO₂which comprises transferring solids comprising CaCO₃ generated in a carbonation reaction, to be combined with cement raw material before the calcination reaction of the said solid material and the cement raw material to form calcium oxide, CaO.

Also, another embodiment of the invention is the method for capturing CO₂ wherein at least a portion of the solid materials comprising calcium oxide, CaO, produced by the calcination reactions is recirculated to the carbonation reaction.

Another embodiment of the invention is the method wherein the solid material comprising CaCO₃ transferred from the carbonation reaction is subjected for heating by the solid material comprising CaO being recirculated to the carbonation reaction.

The above described and other features are exemplified by the following figures and detailed description.

### Brief description of the Drawings

Referring now to the figures, which are exemplary embodiments, and wherein the like elements are numbered alike:
Figure 1 schematically depicts a cement manufacturing plant comprising a carbonator and recirculated of the cement kiln exhaust gas.
Figure 2 schematically depicts a cement manufacturing plant (prior art).

### Description of preferred embodiments

The cement manufacturing plant, wherein the system for capturing CO₂ as described above is included will be further described.

Cement raw materials, generally lime (calcareous), silica (siliceous), alumina (argillaceous), and iron (ferriferous) are obtained by mining or quarrying. In the clinker production process, the raw materials are crushed and homogenised, e.g. in a raw mill, into a mixture which Is fed into a rotary kiln. This process, generally referred to as raw milling, may be characterized as a dry, wet, semi-dry or semi-wet process depending on the state of the raw material. In the dry process, the raw materials are ground dry and fed to the kiln as a powder. In the wet process, the raw materials are ground wet and fed to the kiln as a slurry. In the semi-dry process, the raw materials are ground dry and then moistened to form nodules which can then be fed to the kiln. In the semi-wet process, the raw materials are ground wet in a slurry, which is dewatered before it is fed to the kiln.

The kiln may be a large rotating pipe, generally about 50 to 100 m long and up to 6 m in diameter. The kiln is heated by a flame at a temperature of about 2000 °C inside of it. The kiln is slightly inclined to allow for the materials to slowly reach the other end, where it is quickly cooled to 100-200 °C.

Generally, four basic oxides in the correct proportions are used to make cement clinker, calcium oxide (about 65 %), silicon oxide (about 20 %), alumina oxide (about 10 %) and iron oxide (about 5 %). These elements mixed homogeneously will combine when heated by the flame to a temperature of approximately 1450 °C. During this process, generally referred to as pyroprocessing, new compounds are formed, such as silicates, aluminates and ferrites of calcium. Hydraulic hardening of cement is caused by hydration of these compounds. The product obtained is called clinker, and is generally present in the form of 1-10 mm nodules formed due to partial melting of the material in the kiln.

During the pyroprocessing process, CO₂ is emitted. CO₂ emissions are both raw material-related and energy-related. Raw material-related emissions, i.e. CO₂ emissions produced during limestone decarbonation, account for about 60 % and combustion of fuels account for about 40 % of total CO₂ emissions from the cement process.

The exhaust gases from a modern cement kiln may typically amount to about 2 tonnes per tonne of clinker made. The kiln outlet gas may for example have a temperature of about 1000 °C when it leaves the kiln. The hot kiln exhaust gas is generally used for pre-heating the raw materials prior to introduction of the materials into the kiln. The pre-heating may for example be performed In one or more grate pre-heaters and/or gas-suspension pre-heaters.

The exhaust gases from the cement kiln carry a large amount of dust, typically about 30 grams per cubic metre. Environmental regulations generally require that this amount be reduced to about 0.1 gram per cubic metre, so dust removal needs to be at least 99.7 % efficient. Methods of dust removal include electrostatic precipitators and bag-filters. The temperature of the kiln outlet gases after use in pre-heating the raw materials and after dust removal may typically be about 150 °C.

In order to reduce the amount of CO₂ which is released to the atmosphere, the cement plant is provided with a gas capturing system for capturing CO₂ from the cement kiln exhaust gas (kiln gas).

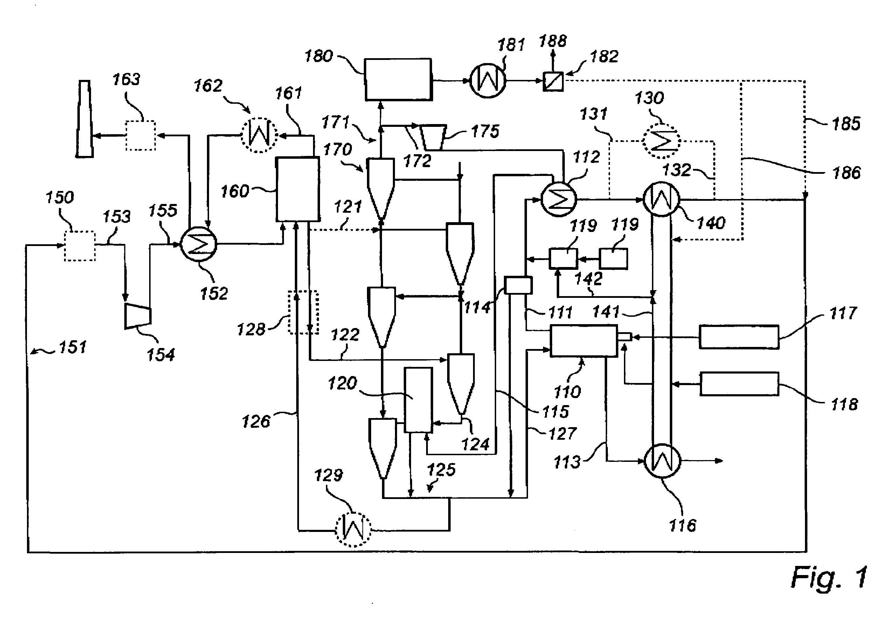

An embodiment of the cement manufacturing plant of the invention is further illustrated in figure 1.

Herein, the cement manufacturing plant 1 comprises the cement kiln 110 wherein lime CaO is treated into clinker/CaO, which is then transported to further treatment via duct 113.

The hot exhaust gas rich in carbon dioxide CO₂ generated during the process in the cement kiln is forwarded to the carbonator 130, thus the unit for carbonation. First the dust in the kiln exhaust gas is removed in a cyclone type dust removal system 114. The dust is transferred to pipe 125 and reintroduced to the cement kiln. The heat of the hot exhaust gas from the cement kiln may be exchanged in a heat exchanger (gas/gas heater) 112. The gas from unit for treatment of the cement raw material 170 is split and one part transferred via a recycle fan 175 to the heat exchanger 112 where it is heated and forwarded to the calciner 120 via duct 115. The hot exhaust gas from the cement kiln may also be used to heat air in the heat exchanger 140 which air is then introduced to the firing system 119 via the ducts 141 and 142.

The heat of hot exhaust gas from the cement kiln may also be heat exchanged for steam generation, forwarded via duct 131 to steam generator 130, and reconnected to duct 111 via duct 132.

Optionally, the flue gas may be conditioned in a unit for conditioning 150 before its introduction into the unit for carbonation via duct 151. Contaminants are most often introduced in the carbonator. The conditioning in unit 150 may, for example, be treatment of the exhaust gas like removal of NOx gases (DeNOx), or dust removal for example by electrostatic precipitation (ESP) or any other suitable dust removal device.

The exhaust gas is then pressurized by the fan unit 154 and heated by the heat exchanger 152 before introduction to the carbonator 160.

The exhaust gas is pressurized to 50 mbar to 400 mbar, preferably pressurized 100 mbar, and heated to a temperature between 300°C and 600 °C for an optimized sorption of the carbon dioxide. The exhaust comprising the carbon dioxide is forwarded to the carbonator 160, the CO₂ is added to the reaction taking place in the carbonator, thus the reaction between lime, CaO, and carbon dioxide CO₂ to form limestone, CaCO₃.

The carbonator is typically operating at a temperature of between 550 and 750 °C, for example between 600 and 700 °C, preferably at about 650 °C.

The exhaust gases with lean content of carbon dioxide CO₂ forwarded from the carbonator 160 via duct 161 may be cooled in multiple steps, the heat may be recovered in unit 162, may be included in the heat exchanger 152, and may also be used as drying agent for the raw material introduced in the plant for the cement manufacturing.

The solid material and the exhaust gas is then introduced into the unit for treatment of cement raw material 170. The solid material forwarded from the carbonator comprises mainly calcium carbonate (limestone) but may also comprise some parts CaO (lime). The solid material from the carbonator is included and mixed with the raw material fed to the unit for pretreatment 170. The unit for pretreatment 170 comprises an arrangement of multiple steps pretreatment of the raw material.

In one arrangement the solid materialcomprises, for example, limestone CaCO₃ which is transported via pipe 121 from the carbonator to the unit for treatment of cement raw material 170. A heat exchange (solid/solid heat exchange) may be performed in a heat exchanger 128 where the heat of stream of solid material (comprising mainly lime) from the calciner forwarded via pipe 126 is transferred to the solid material (comprising mainly limestone) forwarded from the carbonator to the calciner via pipe 121 and 122. The heat exchanger may for example be a cross heat exchanger transferring heat from the solid material of the calciner with the solid material of the carbonator (solid/solid heat exchanger).

In another arrangement, the solid material may forwarded via pipe 121 to the unit for treatment of cement raw material 170, and may be introduced and mixed with the raw material at a higher level of the unit for treatement of raw material. The solid material (mainly CaO, lime) forwarded from the calciner via pipe 125 and pipe 126 is preferably passing heat exchanger 129 for heat recovery.

The carbon dioxide rich exhaust gas generated in the calciner is separated e.g. in cyclones or by other methods separating solid material from a gas stream.

The separated carbon dioxide CO₂ rich exhaust gas is then introduced in the unit for pretreatment of cement raw material, and is transferred with counter-current flow through the unit for treatment of the cement raw material and forwarded via duct 171. The said limestone forwarded to the unit for treatment of the cement raw material is then mixed with the cement raw material during its pretreatement and before it is introduced to the calciner 120 via pipe 124. The calciner 120, the limestone CaCO₃ is split to lime CaO and carbon dioxide CO₂ by heating.

The lime resulting by the reaction in the calciner may be divided into different portions, where one first portion is forwarded back to the carbonator via pipe 126. The second part is forwarded to the cement kiln 110 for producing clinker and lime (CaO) and forwarded for further processing via pipe 113. The clinker and lime may be cooled by heat exchanger 116 wherein the air introduced to the plant may be heated.

The exhaust gas generated in the calciner and the unit for pretreatment of cement raw material may typically comprise contaminants in the form of, for example, dust particles, hydrochloride acid, HCl, nitrous oxides, NOx, sulphur oxides, SOx, and heavy metals including mercury, Hg. If the concentration of gases like oxygen (O₂), nitrogen (N₂) etc. in the CO₂ rich exhaust gas is from 170 is high, a separation step like the gas processing unit (GPU) 182 is needed. Otherwise, the following treatment may be performed in compression- and/or drying systems. The dust present in this carbon dioxide CO₂ rich exhaust gas which has passed the unit for pretreatment of cement raw material may be removed before it is further treated in a gas processing unit (GPU). The dust generated during the calcination process may be extracted and removed from the recycle loop for further processing in a unit for conditioning 180, like in a Electrostatic Precipitator (ESP) process. Further, the heat of the gas may be recovered by a heat exchanger 181 before transferred for further processing.

Optionally, the carbon dioxide CO₂ enriched gas may be forwarded to a gas processing unit (GPU) 182.

Optionally, the gas may also be reintroduced into the cement manufacturing plant and the unit for carbonation via the duct 151 connected via duct 185.

Another option is to introduce the residual inert gas fraction, after carbon dioxide purification in the GPU, back to the duct feeding the air heater, via duct 186, in case the oxygen concentration is high. Otherwise the gas can be routed via 185 to the main kiln exhaust gas.

The heating in the cement plant may be performed in one or more indirect heat exchangers. By the term "indirect heat exchanger" as used herein, is meant a heat exchanger configured for heat exchange between two fluid streams without mixing of the two fluid streams occurring. The heat exchanger may also be be of type solid/solid heat exchanger. The heat exchanger may for example be of the shell and tube type. Suitable types and dimensions of heat exchangers are readily identified by the person skilled in the art.

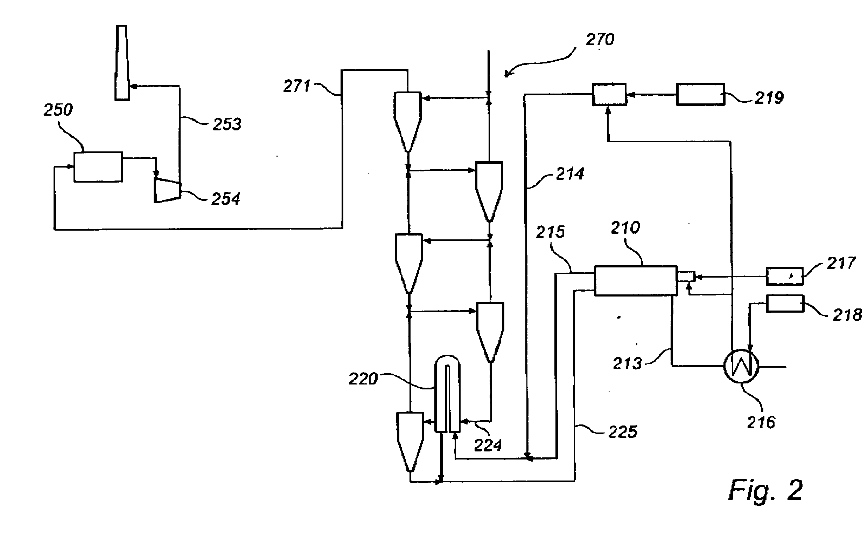

Figure 2 shows a cement plant and its kiln 210 and calciner 220 according to the prior art. Energy is supplied to the calciner 220 via the kiln 211 exhaust gas and from an energy source 218 added to system. Also air 219 may be added to the system. The kiln exhaust any of preceding gas may be further heated by a dedicated firing system 219. Also, the exhaust gas 211 may have to be dedusted, for example by treatment in cyclone (not shown) prior its mixing with the flue gases from the firing system(s). This is performed to reduce or minimize cement losses and depositions in the system. The cement raw material is pre-treated in the raw material unit 270 before it entering the calciner 220.

The cooled exhaust gas 271 from the raw material unit 270 is removed from the system. A draft fan 254 may be included, by which the pressure may be adjusted, for example to compensate the pressure losses. For protecting this fan from the components in the exhaust gas, a flue gas conditioning system 250 may be required. This conditioning system may comprise or include an electrostatic precipitator (ESP) or any other suitable dust removal device.

Advantages obtained by the present invention are:
- Low impact of the efficiency of the cement manufacturing plant;
- A system being independent on other energy sources;
- High purity of carbon dioxide CO2 is obtained due to the closed system;
- A system is provided wherein no air separation unit (ASU) is needed.

While the invention has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A cement manufacturing plant **characterized in that** the plant comprises a system for capturing carbon dioxide (CO₂) from an exhaust gas stream generated in the kiln 110 of the cement manufacturing plant by using regenerative calcium cycle (RCC) into the cement manufacturing process.

2. The cement manufacturing plant according to claim 1 wherein the system comprises a carbonator 160 for capturing the carbon dioxide CO₂ present in the exhaust gas present in the plant.

3. The cement manufacturing plant according to any of preceding claims 1 or 2, wherein the system comprises means for recirculation of the exhaust gas from the klin 110 to the carbonator 160 downstream the kiln.

4. The cement manufacturing plant according to claims 3, wherein the carbonator is operating at temperature in the range between 550 and 750 °C, preferably at 650 °C.

5. The cement manufacturing plant according to any of preceding claims 1 to 4, wherein a portion of the solids comprising calcium carbonate from the carbonator is transferred to the unit for treatment of the cement raw material 170; and the therein separated solids comprising calcium carbonate CaC03 are transferred to the calciner 120.

6. The cement manufacturing plant according to any of preceding claims 1 to 5. wherein the solids comprising calcium oxide from the calciner 120 is partly transferred to the carbonator 160.

7. The cement manufacturing plant according to any of preceding claims 1 to 5, wherein the system comprises one or more heat exchangers 128 wherein the stream of calcium carbonate CaC03 from the carbonator 122 is preheated by the calcium oxide rich stream 126 fed from the calciner.

8. The cement manufacturing plant according to any of preceding 1 to 7 wherein the calciner is supplied with energy by recycling of carbon dioxide CO2 rich exhaust gas stream 115 being heated by heat exchange 112 with the hot exhaust gas stream generated in the cement kiln 110.

9. The cement manufacturing plant according to claim 8 wherein the exhaust gas generated in the cement kiln is subject for preheating air in a heat exchanger 140.

10. The cement manufacturing plant according to claim 9 wherein the exhaust gas generated in the cement kiln is to be used for generating steam in a steam generator 130.

11. A method of capturing carbon dioxide CO2 from a carbon dioxide CO2 rich exhaust gas stream generated in a cement kiln, wherein the method comprises recirculation of the carbon dioxide CO2 rich exhaust gas stream to a unit for canonization.

12. The method according to claim 11 further comprises transferring solids comprising CaC03 generated in a carbonation reaction, to be combined with cement raw material before the calcination reaction of the said solid material and the cement raw material to form calcium oxide, CaO.

13. The method according to claim 12, wherein at least a portion of the solid materials comprising calcium oxide, CaO, produced by the calcination reactions is recirculated to the carbonation reaction.

14. A method according to claim 13 wherein the solid material comprising CaCO3 transferred from the carbonation reaction is subjected for heating by the solid material comprising CaO being recirculated to the carbonation reaction.
